# EUROPÄISCHE PATENTSCHRIFT

(11) **EP 3 216 508 B1**
(45) Veröffentlichungstag und Bekanntmachung des Hinweises auf die Patenterteilung: **29.04.2020**
(21) Anmeldenummer: 17156880.1
(22) Anmeldetag: 20.02.2017
(51) Int. Cl.: B01D 46/00, B01D 39/16, B01D 46/12, F24C 15/20

(54) **FILTERELEMENT FÜR DUNSTABZUGSHAUBE**
FILTER ELEMENT FOR AN EXTRACTOR HOOD
ÉLÉMENT FILTRANT POUR HOTTE ASPIRANTE

(30) Priorität: 08.03.2016 DE 102016203783
(43) Veröffentlichungstag der Anmeldung: 13.09.2017
(73) Patentinhaber: BSH Hausgeräte GmbH, 81739 München (DE)
(72) Erfinder: Herbst, Jens, 75015 Bretten (DE); Kammerer, Simon, 68723 Schwetzingen (DE); Vollmar, Daniel, 76131 Karlsruhe (DE); Hepperle, Georg, 74081 Heilbronn (DE)

(56) Entgegenhaltungen:
- EP-A1- 0 607 809
- EP-A1- 1 426 091
- DE-A1-102009 019 219
- US-A- 4 743 280

## Beschreibung

Die vorliegende Erfindung betrifft ein Filterelement für eine Dunstabzugshaube.

Bei Dunstabzugshauben werden Filterelemente, insbesondere Filterkassetten, verwendet, um aus dem Wrasen, der durch die Dunstabzugshaube angesaugt wird, Verunreinigungen, insbesondere Fettpartikel abzuscheiden. Diese Filterelemente werden daher auch als Fettfilter bezeichnet.

Im Stand der Technik sind Streckmetallfilter bekannt, welche in mehreren Lagen in Sandwichbauweise hintereinander angeordnet sind.

Beispielsweise offenbart die DE 10 2014 209 953 A1 eine Filteranordnung für eine Dunstabzugshaube sowie eine Dunstabzugshaube mit einer solchen Filteranordnung. Die Filteranordnung für eine Dunstabzugshaube weist mindestens eine Filtervorrichtung mit mindestens einem Filterelement auf. Als Filterelement wird ein Element der Filtervorrichtung bezeichnet, das zumindest bereichsweise aus einem Filtermaterial besteht. Als Filtermaterial werden Streckmetallfilterlagen beschrieben, die gegebenenfalls in einem Elementrahmen gehalten sind.

In der DE 10 2009 019 219 A1 ist eine Filtervorrichtung beschrieben, die zumindest zwei Schichten aus einem Filtermaterial aufweist. Die zumindest zwei Schichten sind mittels einer lösbaren Verbindung miteinander verbunden. Das Filtermaterial kann eine gelochte Kunststoffstruktur darstellen und die Filtervorrichtung kann beispielsweise in Dunstabzugshauben eingesetzt werden.

Zudem ist in der US 4,743,280 A eine Filtervorrichtung beschrieben, die Maschenfilter aufweist, die in einer V-Form angeordnet sind. Die Maschenfilter bestehen vorzugsweise aus Metall.

In der EP 0 607 809 A1 ist ein Mehrschichtverbundfilter mit übereinander angeordneten Filtern gezeigt, wobei jedes Filter aus Drähten mit einem im Wesentlichen dreieckigen oder trapezförmigen Querschnitt besteht, die parallel zueinander angeordnet sind. Die Drähte eines Filters kreuzen die Drähte des benachbarten Filters und sind mit diesen an den Kreuzungspunkten verschweißt.

Schließlich ist in der EP 1 426 091 A1 ein Feinstfiltereinsatz zum Abscheiden feinst verteilter Tröpfchen aus Aerosolen, insbesondere zum Abscheiden feinster Öl- und/oder Emulsionströpfchen aus Öl- und/oder Emulsionsnebeln, mit einem Filterrahmen und mehreren im Filterrahmen gehaltenen Lagen eines Filtergestricks beschrieben, wobei das Filtergestrick ausschließlich aus Kunststoffasersträngen gestrickt ist, und die Maschengröße der einzelnen Maschen des Filtergestricks so bemessen ist, dass durch die mehrlagige Anordnung feinst verteilte Tröpfchen mit einer Größe von kleiner oder gleich 1 µm aus dem Aerosol abzuscheiden sind. Damit der Feinstfiltereinsatz eine ausreichende Formstabilität besitzt, wird in dem Dokument ferner vorgeschlagen, die Lagen des Filtergestricks zwischen zwei flächigen Halteeinrichtungen in einer flächigen Form im Filterrahmen zu halten. Als besonders vorteilhaft hat sich dabei die Verwendung eines im Filterrahmen aufgespannten, grobmaschigen Drahtgeflechtes als Halteeinrichtung gezeigt.

Streckmetalllagen weisen große Öffnungen auf, um den Druckverlust pro Lage zu minimieren. Aufgrund des Herstellungsprozesses, in welchem das Metall angeritzt wird, um dann gestreckt zu werden ergeben sich enorm raue Kanten. Aufgrund dieser Fertigungsmethode ist der Druckverlust trotz der großen Öffnungen, die Maschen darstellen, hoch, wobei die Filtereffizienz wegen der großen Maschen gleichzeitig niedrig ist. Dies liegt daran, dass die einzelnen Maschen zu weit für feinere Partikel sind. Optimaler Weise versperren diese Filterebenen sich gegenseitig, so dass die statistische Wahrscheinlichkeit für einzelne Partikel eine der Streckmetalllagen zu treffen steigt. Dieser Effekt kann durch Sichtblenden verstärkt werden. Dabei steigt die Geschwindigkeit der Luft durch die Versperrungswirkung der Blende an und die Trägheitseffekte werden entsprechend der höheren Geschwindigkeiten dominanter. Nachteil ist ein wesentlich erhöhter Druckverlust, welcher sich negativ auf den Energieverbrauch beziehungsweise allgemein auf die Leistungsfähigkeit des Dunstabzuges auswirkt. Vor allem in Geräten niedriger Leistungsklasse wirkt sich dies negativ auf den Fördervolumenstrom und damit auf die Wrasenfangrate aus. Um Filtereffizienzsteigerungen zu erreichen werden bei Streckmetallfiltern prinzipbedingt mehr Lagen eingesetzt, was zusätzlich zu den physikalischen Auswirkungen, die Stückkosten und das Gewicht pro Filter signifikant erhöht.

Aufgabe der vorliegenden Erfindung ist es daher die Nachteile des Standes der Technik zu überwinden. Insbesondere soll ein Filterelement bereitgestellt werden, bei dem der Fettanteil des Wrasens auf zuverlässige Weise reduziert und somit die Fettfilterleistung verbessert werden kann und dennoch der Druckverlust minimiert wird.

Gemäß der Erfindung wird die Aufgabe gelöst durch ein Filterelement für eine Dunstabzugshaube mit den Merkmalen gemäß Anspruch 1.

Das Filterelement wird im Folgenden auch als Filtereinheit, Filterkassette oder Fettfilter bezeichnet. Das Filterelement stellt vorzugsweise ein Filterelement dar, das an einer Ansaugöffnung einer Dunstabzugshaube lösbar befestigt werden kann. Das Filterelement kann dabei in einen Rahmen aufgenommen sein und über diesen an der Ansaugöffnung befestigt sein. Besonders bevorzugt stellt das Filterelement ein Element zum Ausfiltern von Partikeln insbesondere von Fett- oder Ölpartikeln aus Dünsten und Wrasen dar.

Das Filterelement weist erfindungsgemäß zumindest eine Filterlage auf. Als Fiterlage wird hierbei eine Lage bezeichnet, die zumindest aus einer Schicht von Filtermaterial besteht und die in dem Filterelement angeordnet ist und von anströmendem Wrasen durchströmt wird. Eine der Oberflächen der Filterlage kann daher auch als Anströmfläche und die gegenüberliegende Oberfläche als Abströmfläche bezeichnet werden. Allerdings können erfindungsgemäß auch mehr als eine Filterlage in dem Filterelement angeordnet sein. Wenn das Filterelement mehr als eine Filterlage aufweist, liegen diese in dem Filterelement aufeinander, das heißt sie sind gestapelt und werden nacheinander von anströmenden Wrasen durchströmt. Die Filterlage liegt als separates Element vor dem Zusammenbau des Filterelementes vor.

Bei dem Filterelement besteht die zumindest eine Filterlage aus einem Kunststoffmaterial. Als Kunststoffmaterial wird im Sinne der Erfindung geformter Kunststoff bezeichnet. Kunststoff ist aus Werkstoffen ausgebildet, die hauptsächlich aus Makromolekülen bestehen. Die jeweiligen Makromoleküle eines Kunststoffes sind Polymere und daher aus sich wiederholenden Grundeinheiten aufgebaut. Die Polymere können aus Naturstoffen oder rein synthetisch sein. Beispielsweise kann als Kunststoffmaterial Polyester, Polypropylen oder ähnliches verwendet werden.

Erfindungsgemäß weist die Filterlage Öffnungen auf, die in ihrer Größe fixiert sind. Als Öffnung wird die Durchlassöffnung beziehungsweise der Zwischenraum zwischen Filterstegen, die aus Kunststoffmaterial bestehen, in der jeweiligen Filterlage bezeichnet. Die Filterstege werden im Folgenden auch als Stege bezeichnet. Die Öffnungen bestimmen sich durch den Filterstegabstand. Im Sinne der Erfindung werden die Öffnungen auch als Löcher oder Maschen bezeichnet. Durch die Öffnungen in der Filterlage kann der anströmende Wrasen hindurch strömen. Als Öffnungen, die in ihrer Größe fixiert sind, werden Öffnungen bezeichnet, die in ihrer Größe nicht veränderbar sind, das heißt die Filterstege zwischen den Öffnungen können nicht verschoben werden. Somit weisen die Öffnungen einer Filterlage dauerhaft die gleiche Größe auf und die Größe der Öffnungen wird bei der Herstellung einer Filterlage vorbestimmt. Vorzugsweise sind die Öffnungen einer Filterlage gleich groß. Besonders bevorzugt sind die Öffnungen der Filterlage fein beziehungsweise klein gegenüber den Maschen aus dem Stand der Technik bekannten Streckmetalllagen.

Die Verwendung von Filterlagen, die aus Kunststoffmaterial bestehen, weist eine Reihe von Vorteilen auf. Die Herstellung von Streckmetall mit erfindungsgemäß ähnlicher Feinheit der Öffnungen ist kostenintensiv und nur durch Verfahren wie Stanzen, Laserschneiden oder ähnlichen Verfahren arbeitsintensiv, aufwendig und mit erheblichen Materialverlusten möglich. Demgegenüber ist die Herstellung einer Filterlage die aus einem Kunststoffmaterial besteht vereinfacht, schneller und kostengünstiger.

Des Weiteren können durch die Verwendung eines Kunststoffmaterials in einer Filterlage, die in der Filterlage gebildeten Öffnungen kleiner beziehungsweise feiner gegenüber den großen Öffnungen beziehungsweise Maschen der aus dem Stand der Technik bekannten Streckmetallfilterlagen sein. Somit kann auch insgesamt die Anzahl der Öffnungen einer erfindungsgemäßen Filterlage gegenüber einer Streckmetalllage erhöht werden. Weiterhin vorteilhaft ist, dass bei Verwendung von Kunststoff gleichmäßige Stege zwischen den Öffnungen möglich sind. Somit sind raue Kanten, die bei Streckmetalllagen entstehen, nicht zu befürchten und der Druckverlust aufgrund von Verwirbelungen kann dadurch verringert werden. Zudem kann durch die Möglichkeit bei der Verwendung von Kunststoff schmale Stege herzustellen, der Flächenanteil der Öffnungen in der Fläche der Filterlage vergrößert werden. Die Versperrung, die durch die Stege entsteht, liegt erfindungsgemäß daher bei <50% der Fläche der Filterlage. Durch die schmalen und gleichmäßigen Stege kommt es zudem zu vielen kleinen Umlenkungen des Wrasens innerhalb einer erfindungsgemäßen Filterlage gegenüber wenigen großen Umlenkungen in einem Streckmetallfilter. Hierdurch kann der Druckverlust am Filterelement gering gehalten werden. Weiterhin wird der induzierte Turbulenzgrad der Strömung durch die Filterlage eines erfindungsgemäßen Filterelements reduziert. Zudem ist außerdem vorteilhaft, dass durch die kleineren Öffnungen effektiv mehr Wrasen nahe an den Filterstegen vorbei geführt wird und somit die Wahrscheinlichkeit der mechanischen beziehungsweise physikalischen Abscheidung, vor allem für größere Partikel wächst, wodurch die Filterleistung eines Filterelements insgesamt gesteigert werden kann.

Ein weiterer Vorteil der Verwendung von Kunststoffmaterial als Fiterlage liegt in der chemischen Beständigkeit gegen Reinigungsmitteln, wie sie in Spülmaschinen benutzt werden. Somit ist das erfindungsgemäße Filterelement beständiger gegenüber Korrosionsschäden, als die aus dem Stand der Technik bekannten Streckmetallfilter, sofern diese nicht in einem separatem Bearbeitungsschritt Oberflächentechnisch bearbeitet wurden, bspw. durch Eloxal-Verfahren. Diese Nachbehandlung von Streckmetall ist mit weiterem Aufwand und Kosten verbunden.

In einer bevorzugten Ausführungsform des erfindungsgemäßen Filterelementes ist die zumindest eine Filterlage als ein flächiges oder ebenes Element ausgebildet. Im Sinne der vorliegenden Erfindung wird ein Filterelement als flächig oder eben bezeichnet, dessen Grundform flächig oder eben ist und dessen Abmessungen in der Fläche größer sind als die Dicke des Körpers. Die flächige oder ebene Filterlage stellt vorzugsweise ein einstückiges Element dar. Eine Oberfläche der Filterlage dient zumindest teilweise für den Einlass von verunreinigter Luft in die Filterlage des Filterelementes und die gegenüberliegende Oberfläche dient zum Luftauslass der Luft aus der Filterlage. Die Filterlage kann eine Rechteckform aufweisen.

Des Weiteren ist eine Ausführungsform des erfindungsgemäßen Filterelementes bevorzugt, in dem die Materialstärke einer Filterlage kleiner als 2 mm, bevorzugt kleiner als 1 mm und besonders bevorzugt ungefähr 0,5mm ist.

Vorteilhaft an dieser Ausgestaltung ist, dass die Filterlage einen geringen Platzbedarf hat. Somit können die Höhe des gesamten Filterelementes und damit der Bauraum, der zum Einbau des Filterelementes in der Dunstabzugshaube benötigt wird, minimiert werden und dennoch die Filterfunktion erhöht werden. Durch die ebene oder flächige Ausgestaltung der Filterlage in einem erfindungsgemäßen Filterelement, wird die Filterfläche in einer Dunstabzugshaube insgesamt vergrößert, wodurch ein zuverlässiges Abtrennen der Fettpartikel aus dem Wrasen oder Kochdünsten gewährleistet wird.

Erfindungsgemäß besteht die zumindest eine Filterlage aus zumindest zwei Schichten und die Schichten sind jeweils aus Kunststoffprofilen ausgebildet. Als Schicht wird im Sinne der Erfindung ein Element bezeichnet, aus dem eine Filterlage zumindest teilweise ausgebildet ist und welche aus einem Kunststoffmaterial besteht. Gemäß einer Ausführungsform weist eine Filterlage zumindest zwei Schichten auf, die in der Filterlage aufeinander liegen, das heißt gestapelt sind und die nacheinander von anströmende Wrasen durchströmt werden. Die Schichten können vor dem Zusammenbau der Filterlage als separate Elemente vorliegen.

Die Schichten einer Filterlage sind aus Kunststoffprofilen gebildet. Im Sinne der Erfindung ist ein Profil ein langes dünnes Element, welches flexibel oder starr ist. Das Profil kann in seiner Länge abhängig von der Größe der zu verwendenden Schicht auf einfache Weise begrenzt werden. Der Querschnitt des Kunststoffprofils kann beispielweise kreisförmig, oval, flach oder vier- oder mehreckig sein. Eine Schicht einer Filterlage kann mehrere Kunststoffprofile aufweisen, das heißt, dass die Schicht nicht aus einem einzigen Kunststoffprofil bestehen muss.

Vorteilhaft an dieser erfindungsgemäßen Ausgestaltung ist, dass durch die Anordnung zumindest zweier Schichten in einer Filterlage durch die Ausrichtung der Kunststoffprofile der einzelnen Schichten Öffnungen ausgebildet werden können, durch die der anströmende Wrasen hindurchtreten sowie umgeleitet werden kann. Die Filterstege werden somit bei dieser Ausführungsform durch Teile der Kunststoffprofile der einzelnen Schichten gebildet. Insbesondere wird der anströmende Wrasen durch die Kunststoffprofile umgeleitet und die Chance erhöht, dass Partikel an den Filterstegen abgeschieden werden. Zudem können in einer Filterlage, die aus zumindest zwei Schichten besteht, gegenüber einer Filterlage, die aus nur einer Schicht besteht, mehr Partikel abgeschieden werden. Somit wird die Filterleistung insgesamt verbessert. Weiterhin vorteilhaft ist, dass durch die Verwendung von Kunststoffprofilen in der Herstellung der einzelnen Schichten einer Filterlage die Luftdurchlässigkeit der Filterlage durch die zwischen den Kunststoffprofilen in einer Schicht eingestellten Abstände senkrecht zur Anströmrichtung auf einfache Weise auf definierte Werte eingestellt werden kann und somit die fixierte Größe der Öffnungen der Filterlage bereits im Herstellungsprozess je nach Anforderung des Filterelementes festgelegt werden kann. Zudem kann die Verteilung der Luftdurchlässigkeit über die Fläche der Schichten in einer Filterlage geleichmäßig eingestellt werden, da lediglich das Kunststoffmaterial selbst, das heißt die Kunststoffprofile die Luft beziehungsweise den Wrasen an einem Durchströmen durch die Filterlage hindern.

Erfindungsgemäß sind die Kunststoffprofile in einer Schicht parallel zueinander angeordnet. Im Sinne der Erfindung werden Kunststoffprofile als parallel zueinander angeordnet bezeichnet, wenn sie in einer Ebene liegen und sich nicht gegenseitig schneiden. Somit liegen die Enden von benachbarten Kunststoffprofilen nebeneinander in einer Ebene vor. Kunststoffprofile, die parallel zueinander angeordnet sind, weisen über ihre gesamte Länge immer denselben Abstand zueinander auf. Somit kann die Größe des Zwischenraums zwischen den Kunststoffprofilen einer Schicht bereits bei der Herstellung bestimmt werden. Vorteilhaft an dieser Ausgestaltung ist, dass die Herstellung der einzelnen Schichten leicht ist und somit die Herstellung einer Filterlage vereinfacht ist.

Erfindungsgemäß ist innerhalb einer Filterlage die Ausrichtung der Kunststoffprofile der einen Schicht unterschiedlich zu der Ausrichtung der Kunststoffprofile der anderen Schicht. Auch bei dieser Ausführungsform sind die Kunststoffprofile in den einzelnen Schichten jeweils parallel zueinander angeordnet. Dies bedeutet, dass die jeweiligen Enden der Kunststoffprofile in einer Schicht nebeneinander angeordnet sind. Es werden jeweils die Schichten betrachtet, die übereinander liegenbeziehungsweise gestapelt sind. Die beiden Schichten, deren Ausrichtung unterschiedlich ist, können daher auch als benachbarte Schichten bezeichnet werden. Erfindungsgemäß sind die Kunststoffprofile einer Schicht über Kreuz auf den Kunststoffprofilen einer zweiten Schicht angeordnet. Als über Kreuz wird hierbei ein Anordnen der Kunststoffprofile bezeichnet, bei dem in senkrechter Draufsicht auf eine Filterlage zumindest ein Teil der Kunststoffprofile der einen Schicht durch zumindest einen Teil der Kunststoffprofile der anderen Schicht verdeckt wird. Die Kunststoffprofile der beiden Schichten stehen dabei in einem Winkel, der größer Null und ungleich 180° ist. Vorzugsweise sind die Kunststoffprofile der einen Schicht in einem rechten Winkel zu den Kunststoffprofilen einer anderen Schicht ausgerichtet. Durch diese Ausgestaltung der Filterlagen kann die Größe der Öffnungen einer Filterlage durch die Anordnung, Anzahl und der Größe des Querschnitts der Kunststoffprofile festgelegt beziehungsweise bestimmt werden.

Bei der Ausführungsform, bei der die Schichten durch Kunststoffprofile gebildet werden und in einer Filterlage die Ausrichtung der Kunststoffprofile der einen Schicht unterschiedlich zu der Ausrichtung der Kunststoffprofile der anderen Schicht ist, kann die Filterlage durch Kalandrieren hergestellt werden und hierdurch eine feste Schichtstruktur geschaffen werden. Hierbei werden zwei gegenläufig rotierende Walzen verwendet, in welchen jeweils eine Schichtstruktur als Negativ eingebracht ist. Hierbei kann die Schichtstruktur, wie etwa Stegabstand und Versatzwinkel der Schichten durch die Kalandrierwalzen exakt eingestellt werden.

Vorteilhaft an dieser Ausführungsform ist, dass durch die Anordnung der Kunststoffprofile zweier Schichten zueinander, ein Vielzahl von kleinen Öffnungen ausgebildet werden können, die durch gleichmäßige und schmale Stege begrenzt sind, welche aus den über Kreuz angeordneten Kunststoffprofilen zweier Schichten ausgebildet werden. Durch die schmalen und gleichmäßigen Stege werden Versperrungen von unter 50% der Fläche der Filterlage erreicht. Zudem wird der Wrasen durch die vielen schmalen Stege häufig umgelenkt, wodurch der Druckverlust an der Filterlage gering gehalten wird. Zudem wird durch diese Ausgestaltung auch das Abscheidungsvermögen für die Abscheidung von Verunreinigungen an der Filterlage verbessert, da die Dünste und Wrasen beim Durchströmen der Filterlage einen Richtungswechsel ausführen und dadurch die Abscheidung von Verunreinigung an dem Kunststoffmaterial unterstützt wird. Somit kann die Filterleistung des Filterelements insgesamt verbessert werden. Weiterhin vorteilhaft ist, dass durch die Ausgestaltung der Schichten in einer Filterlage, die Filterlage eine ausreichende Stabilität aufweist. Schließlich weist diese Ausführungsform der Filterlage den Vorteil auf, dass die Filterlage als Endloslage hergestellt werden kann und die Filterlage für einzelne Filterelemente aus dieser Endloslage ausgeschnitten oder ausgestanzt werden können. Eine solche Endloslage ist bei der Verwendung von feinem Streckmetall, das nur schwer hergestellt werden kann, nicht oder nur schwer möglich.

In einer weiteren Ausführungsform des erfindungsgemäßen Filterelementes sind die zumindest zwei Schichten, die eine Filterlage ausbilden, unlösbar miteinander verbunden. Im Sinne der Erfindung wird eine Verbindung als unlösbar bezeichnet, wenn diese Verbindung so fest miteinander verbunden ist, dass sie nicht zerstörungsfrei gelöst werden kann. Vorzugsweise sind die Kunststoffprofile zwei übereinander gestapelter Schichten an den Stellen, an denen sich die Kunststoffprofile überlagen oder kreuzen verschmolzen oder verklebt. Die Verbindung der beiden Schichten kann bei der Herstellung einer der Schichten vorgenommen werden. Beispielsweise können die Kunststoffprofile der einen Schicht auf die Kunststoffprofile der anderen Schicht aufgeformt werden. Allerdings liegt es auch im Rahmen der Erfindung die Schichten einzeln herzustellen und anschließend unlösbar miteinander zu verbinden, beispielsweise durch Erwärmen oder Aufbringen von Klebstoff.

Vorteilhaft an der Ausgestaltung, bei der die Schichten unlösbar miteinander verbunden sind, ist, dass dadurch die Größe der Öffnungen einer Filterlage nicht mehr verändert werden können und dadurch fixiert ist. Somit kann die Größe der Öffnungen bereits bei der Herstellung einer Filterlage vorbestimmt werden und demnach die Größe derart eingestellt werden, dass eine Vielzahl von Partikeln unterschiedlicher Größe an den Kunststoffprofilen, die die Stege zwischen den Öffnungen ausbilden, hängen bleiben oder abgeschieden werden. Somit wird insgesamt die Filterleistung erhöht. Zudem ist es möglich, dass die Öffnungen kleiner als bei den im Stand der Technik vorbekannten Streckmetallfiltern vorgesehen sind. Weiterhin kann nicht nur die Größe der Öffnungen sondern auch der Anzahl der Öffnungen in einer Filterlage bereits bei der Herstellung der Filterlage bestimmt werden. Vorzugsweise wird eine Filterlage mit vielen kleinen Öffnungen ausgebildet. Weiterhin vorteilhaft an dieser Ausgestaltung ist, dass die Herstellung der Filterlage vereinfacht wird, da die miteinander verbundenen Schichten als einteiliges Bauteil vorliegen.

In einer bevorzugten Ausführungsform des erfindungsgemäßen Filterelementes, weist das Filterelement zumindest zwei Filterlagen auf. Indem das Filterelement zumindest zwei Filterlagen aufweist kann die Speicherkapazität des Filterelements für Verunreinigungen weiter gesteigert werden. Verunreinigungen, die in dem Filterelement gespeichert werden, sind insbesondere flüssige Verunreinigungen, wie Fett oder Kondenswasser. Allerdings können mit dem erfindungsgemäßen Filterelement auch feste Verunreinigungen, wie beispielsweise Pollen ausgefiltert werden und an dem Filterelement anhaften.

In einer besonders bevorzugten Ausführungsform des erfindungsgemäßen Filterelementes sind die Filterlagen innerhalb des Filterelementes verdreht zueinander angeordnet. Im Sinne der Erfindung bezeichnet verdreht zueinander, dass die Filterstege der Filterlagen in einem bestimmten Winkel zueinander ausgerichtet sind. Vorzugsweise liegt dieser Winkel zwischen 20 bis 70°. Die Filterlagen können beispielsweise um einen Winkel von 45° zueinander verdreht sein. Vorteilhaft an dieser Ausgestaltung ist, dass die Filtereffizienz durch eine statistisch bessere Verdeckung der Öffnungen der einen Filterlage durch Filterstege der weiteren Filterlage weiter erhöht werden kann. Insbesondere ist in senkrechter Draufsicht auf die aufeinander liegenden Filterlagen zumindest ein Teil der Öffnungen der einen Filterlage durch die Filterstege der weiteren Filterlage verdeckt.

Des Weiteren ist eine Ausführungsform des erfindungsgemäßen Filterelementes bevorzugt, in dem der definierte Abstand der Kunststoffprofile und damit die Öffnungsgröße der Öffnungen des Kunststoffmaterials der Filterlage kleiner als 1 mm und besonders bevorzugt kleiner als 0,5 mm ist. Somit sind die Öffnungen des erfindungsgemäßen Filterelements kleiner als die Öffnungen bei aus dem Stand der Technik vorbekannten Filterelementen, wie beispielsweise Streckmetallfilter, die in der Regel eine Maschenweite von 3mm aufweisen. Vorteilhaft an dieser Ausgestaltung ist demnach, dass ein größere Vielzahl an unterschiedlich großen Partikeln abgeschieden werden können, wodurch die Filterleistung gesteigert wird. Weiterhin vorteilhaft ist, dass die Größe der Öffnungen einer Filterlage nach den Anforderungen des Filterelements entsprechend gewählt werden kann.

Die Erfindung wird im Folgenden erneut unter Bezugnahme auf die beiliegenden Zeichnungen beschrieben. Es zeigen:
- Figur 1:: eine schematische, perspektivische Unteransicht auf eine Dunstabzugshaube mit Filterelementen gemäß einer Ausführungsform der vorliegenden Erfindung;
- Figur 2:: eine schematische Darstellung der mechanischen Abscheidung von Fettpartikeln im Bereich eines Filterelementes;
- Figur 3:: eine schematische Ansicht eines ersten Ausführungsbeispiels einer Filterlage eines erfindungsgemäßen Filterelements;
- Figur 4:: eine schematische Ansicht einer bekannten Filterlage eines Filterelements;
- Figur 5:: eine schematische Ansicht einer bekannten Filterlage eines Filterelements; und
- Figur 6:: eine schematische Ansicht der Ausrichtung von vier Filterlagen zueinander.

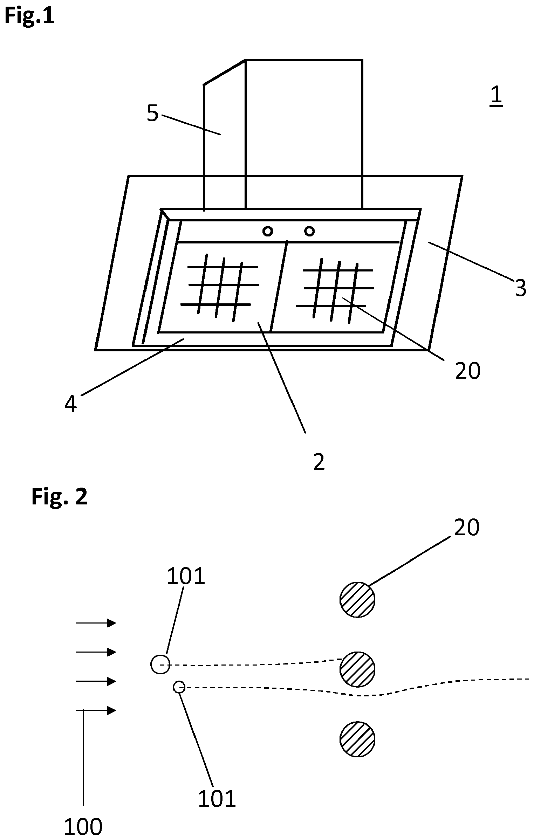

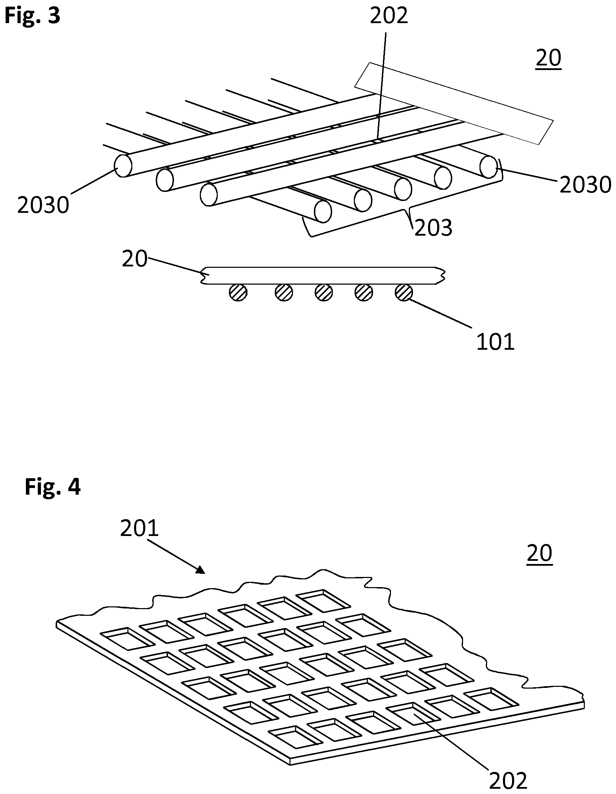

In Figur 1 ist eine schematische Unteransicht einer Dunstabzugshaube 1 gezeigt. Die Dunstabzugshaube 1 stellt eine sogenannte Schrägesse dar. Diese besteht aus einem Kamin 5 und einem sich unterhalb des Kamins 5 erstreckenden Wrasenschirms 3. Der Wrasenschirm 3 steht zu der Horizontalen verschwenkt nach oben. In dem Wrasenschirm 3 ist eine Ansaugöffnung 4 vorgesehen, in der in der dargestellten Ausführungsform zwei Filterelemente 2 in Form von Filterkassetten eingebracht sind. Der Wrasen strömt die Dunstabzugshaube 1 von unten an und gelangt so zu den Filterelementen 2 und tritt in diese ein. Die in Figur 1 sichtbare Seite der Filterelemente 2 wird daher als Anströmseite bezeichnet. Mögliche Ausführungsformen der Filterelemente 2 sind in den Figuren 3 bis 5 gezeigt.

In Figur 2 ist eine schematische Darstellung der Fettpartikelabscheidung im Bereich des Filterelementes einer Dunstabzugshaube gezeigt. Meist wird das Prinzip der mechanischen Abscheidung eingesetzt, wobei ein Hauptprinzip die Trägheitsabscheidung ist. Dabei wird der Kochdampf oder Wrasen 100 durch ein Filterelement 20 gezogen und die Partikel 101 können aufgrund ihrer Massenträgheit nur mit einer gewissen Wegverzögerung den Luftumlenkungen folgen. Je größer die Partikel 101 und desto höher ihre Geschwindigkeit, desto größer ist die Wahrscheinlichkeit einer Kollision mit dem Filtermaterial des Filterelements 20 und die Partikel 101 werden abgeschieden. Je kleiner die Partikel 101 desto geringer ist die Abscheidewahrscheinlichkeit. Es ergibt sich eine Abscheiderate in Abhängigkeit der Partikelgröße. Es kommt zudem aufgrund von Turbulenzen und Eigenschwingungen der Partikel noch zu überlagerten chaotischen Bewegungen um die Stromlinien. Diffusionsabscheidung ist ein weiteres Wirkprinzip der mechanischen Abscheidung.

Figur 3 zeigt eine erste Ausführungsform einer Filterlage 20 des erfindungsgemäßen Filterelements 2. Das Filterelement 2 kann aus mehreren Filterlagen 20 aufgebaut sein. Die Filterlage 20 besteht aus Kunststoffmaterial. Die Filterlage 20 ist in dieser Ausführungsform aus zwei Schichten 203 aufgebaut. Die Schichten 203 sind jeweils aus Kunststoffprofilen 2030 gebildet. Die Anzahl der Kunststoffprofile 2030 einer Schicht 203 kann je nach Anforderungen des Filterelementes 2 angepasst werden, sowie der Abstand zwischen den Kunststoffprofilen 2030. In dieser Ausführungsform weisen die Kunststoffprofile 2030 einen kreisförmigen Querschnitt auf. Der Querschnitt kann aber auch oval, flach oder vier- oder mehreckig sein. Zudem kann die Stärke der Kunststoffprofile 2030 je nach Anforderung angepasst werden. Die Kunststoffprofile 2030 sind in einer Schicht 203 parallel zueinander in einem definierten Abstand zueinander angeordnet. Auf Grund des Abstandes der Kunststoffprofile 2030 zueinander entstehen Zwischenräume zwischen den Kunststoffprofilen 2030, durch die der anströmende Wrasen durchtreten kann.

Zudem ist die Ausrichtung der Kunststoffprofile 2030 einer Schicht 203 unterschiedlich zur Ausrichtung der Kunststoffprofile 2030 einer anderen Schicht 203. Vorzugsweise liegen diese Schichten 203 übereinander. Insbesondere sind die Kunststoffprofile 2030 der einen Schicht 203 in einem rechten Winkel zu den Kunststoffprofilen 2030 einer anderen Schicht 203 ausgerichtet. Vorzugsweise überdecken somit die Kunststoffprofile 2030 der einen Schicht 203 teilweise die Kunststoffprofile 2030 der anderen Schicht 203. Durch die Anordnung der Kunststoffprofile 2030 der jeweiligen Schicht 203 zu den Kunststoffprofilen 2030 der anderen Schicht 203 entstehen zwischen den Kunststoffprofilen 2030 der beiden Schichten 203 Öffnungen 202 in der Filterlage 20, durch die der anströmende Wrasen hindurchtreten kann. An den Kontaktstellen, an denen die Kunststoffprofile 2030 der beiden Schichten 203 aneinander anliegen, sind diese miteinander verbunden. Insbesondere können die Kunststoffprofile 2030 dort miteinander verklebt oder verschmolzen sein.

Die zumindest zwei Schichten 203 sind somit unlösbar miteinander verbunden. Daher sind die Öffnungen 202 in ihrer Größe fixiert, das heißt, dass sich die Größe der Öffnungen 202 nicht verändern kann. Somit kann die Größe der Öffnungen 202 bereits beim Herstellen der Filterlage 20 je nach Anforderungen festgelegt werden und nicht mehr beispielwese während des Einbaus des Filterelements 2 in eine Dunstabzugshaube versehentlich verändert werden oder durch die Anlagerung von Verunreinigungen und den Durchtritt von Partikeln verändert werden.

Neben der Fettfiltration, welche auf Basis der Trägheits- und Diffusionsabscheidung ein statistisch physikalischer Vorgang ist, müssen die Filter das Fett bis zum nächsten Reinigungsvorgang durch den Kunden binden. Zur Verdeutlichung dessen, ist in Figur 3 ein Teilbereich der Filterlage 20 der Ausführungsform der Figur 3 dargestellt. Idealerweise weißt die Filterlage 20 einige enge Kontaktflächen mit kleinen Radien auf, in denen sich Fettpartikel 101 aufgrund der Kapillarität stärker sammeln und dort anhaften. Der kleine Radius und die Menge der Kontaktflächen (dargestellt durch die Pfeile) wird durch die Größe der Öffnungen 202, die Stegbreite, das heißt die Stärke der Kunststoffprofile und die Anordnung der Schichten 203 definiert.

In der Figur 4 wird eine Filterlage eines bekannten Filterelementes gezeigt. Hierbei besteht das Filterelement aus einer Filterlage 20, die aus lediglich einer Schicht, die aus Kunststoffmaterial 201 ausgebildet ist, besteht. Das Filterelement, kann aus mehreren Filterlagen 20 bestehen. Gemäß der Figur 4 ist die Filterlage 20 als eine ebene Platte ausgebildet, in welche Öffnungen 202 mit einer fixierten Größe eingebracht sind. Die Öffnungen 202 weisen jeweils 4 Filterstege auf über die sie mit anderen Öffnungen 202 verbunden sind, wobei diese Stege aus Kunststoffmaterial 201 ausgebildet sind. Die Filterlage stellt daher eine Kunststoffplatte mit eingebrachten Öffnungen 202 dar.

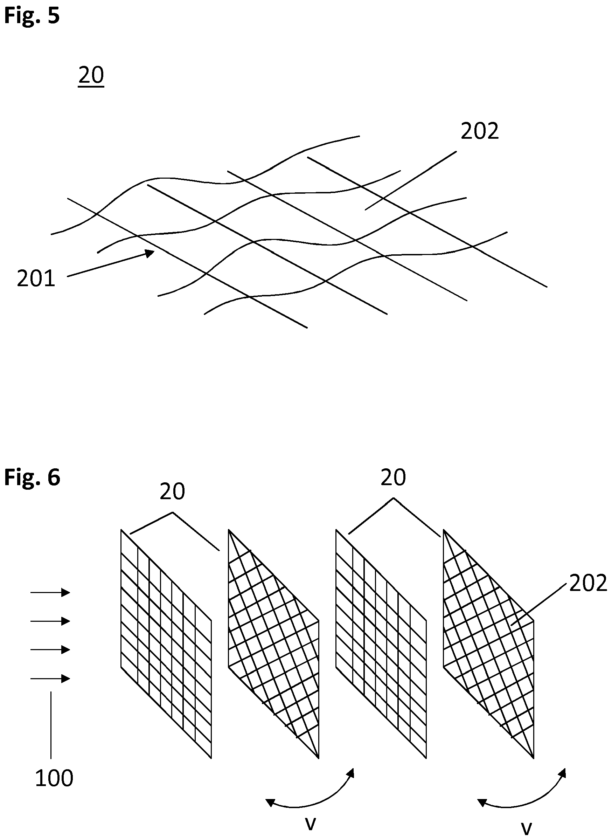

Figur 5 zeigt eine Filterlage 20 eines bekannten Filterelementes. Hierbei ist das Kunststoffmaterial 201 gewebt. Durch den Aufbau dieser Filterlage 20 entstehen auch Öffnungen 202 zwischen dem Kunststoffmaterial 201, insbesondere handelt es sich bei den Öffnungen 201 um Maschen.

In der Figur 6 ist ein Filterelement 2 gezeigt, welches aus mehreren Filterlagen 20 aufgebaut ist. Zur Vereinfachung der Darstellung ist in dieser Ausführungsform das Filterelement 2 aus vier Filterlagen 20 aufgebaut. Die Anzahl der Filterlagen 20 ist erfindungsgemäß jedoch nicht auf eine bestimmte Anzahl begrenzt. Die einzelnen Filterlagen 20 sind in dieser Ausführungsform verdreht (v) zueinander ausgerichtet. Vorzugsweise sind die Filterlagen 20 in einem Winkel zwischen 20 bis 70° verdreht zueinander angeordnet. In der dargestellten Ausführungsform sind die Filterlagen 20 von links nach rechts betrachtet, insbesondere, wenn der anströmende Wrasen 100 von links nach rechts durch die einzelnen Filterlagen 20 strömt, in den Winken 0° - 45° - 0° - 45° ausgerichtet.

Mit der vorliegenden Erfindung kann eine Reihe von Vorteilen erzielt werden. Durch die Verwendung eines Kunststoffmaterials können die Filterlagen kleinere Öffnungen als in den vorbekannten Filtern wie Streckmetallfilter aufweisen. Weiterhin sind die Öffnungen der Filterlage fixiert. Durch die schmalen und gleichmäßigen Stege zwischen den Öffnungen werden Versperrungen unter 50% erreicht. Des Weiteren wird der Druckverlust auf Grund der vielen kleinen Umlenkungen anstatt weniger großer an der Filterlage gering gehalten. Durch die kleineren Öffnungen wird effektiv mehr Wrasen an den Filterstegen vorbei geführt und die Wahrscheinlichkeit der mechanischen Abscheidung, vor allem für größere Partikel, wächst. Dadurch kann die Filtereffizienz gesteigert werden.

Mit bereits zwei Lagen aus ausgewähltem Kunststoffmaterial können bei 10% niedrigerem Druckverlust bei gleichen Anströmbedingungen für beispielweise 2 Mikrometer Partikel 25% höhere Filtereffizienz erreicht werden (25 zu 50%). Da das erfindungsgemäße Filterelement sich sehr gut auslegen und skalieren lässt, können die Filter entsprechend der Normen auf bestimmte Labelstufen exakt ausgelegt werden ohne wesentlich höhere Verluste zu erzeugen.

Des Weiteren ist durch die Verwendung von Kunststoffmaterial eine Funktionserweiterung des erfindungsgemäßen Filterelements durch das verwendete Material möglich. Durch das Einbringen von Additiven können beispielweise Sicherheitsaspekte verstärkt werden (Flammhemmer) oder die Lebensdauer der Filter unter Realbedingungen (Temperatur- und UV-Einwirkung) verlängert werden.

Beispielsweise lassen sich Kunststoffe in ihren technischen Eigenschaften, wie Formbarkeit, Härte, Elastizität, Bruchfestigkeit, Temperatur- und Wärmeformbeständigkeit sowie in ihrer chemischen Beständigkeit durch die Wahl der Makromoleküle, Herstellungsverfahren und in der Regel durch Beimischung von Additiven in weiten Grenzen variieren und somit können dem erfindungsgemäßen Filterelement, welches zumindest eine Filterlage aufweist, die aus Kunststoffmaterial besteht, weitere Eigenschaften verliehen werden.

Solche Additive können Stabilisatoren sein, die die Lebensdauer der Kunststoffe und somit des erfindungsgemäßen Filterelements erhöhen und es vor schädigenden Einflüssen schützen. Des Weiteren können die Stabilisatoren Lichtschutzmittel umfassen, wodurch das Filterelement gegen eine Schädigung durch ultraviolettes Licht geschützt werden kann.

Kunststoffe sind empfindlich gegenüber Wärmeeinwirkung, wodurch bei einer oberhalb für das Material charakteristischen Temperatur der Zerfall der molekularen Struktur einsetzt. Um den Kunststoff und somit auch das erfindungsgemäße Filterelement vor dem Verfall zu schützen, können in den Herstellungsprozess der Filterlagen Wärmestabilisatoren zugefügt werden, die einen solchen Verfall verhindern können.

Bei Bränden geht von Kunststoffen eine große Gefahr aus, da sie zum einen in der Lage sind die Brände zu erhalten und zum anderen bei einer unkontrollierten Verbrennung giftige Gase, wie Blausäure, Kohlenstoffmonoxid, Chorwasserstoff oder Dioxine frei werden. Die Verwendung von Flammschutzmitteln als Additiv kann entweder den Sauerstoffzutritt zum Brand verhindern oder die chemische Reaktion der Verbrennung stören.

Des Weiteren können den Kunststoffen, die in ihrer reinen Form farblos sind, Farbmittel hinzugefügt werden. Kunststoffe können dabei mit Farbstoffen, die sich auf molekularer Ebene im Polymer lösen oder an der Oberfläche adsorbieren oder mit Pigmenten, die meist unlöslich und anorganische Aggregate sind, eingefärbt werden. Der überwiegende Teil der Kunststoffe wird allerdings mit Pigmenten eingefärbt, da diese lichtechter und meist auch preiswerter sind. Durch die Färbung des Kunststoffmaterials zumindest einer Lage eines erfindungsgemäßen Filterelements, kann beim Kunden eine bessere Markenspezifizierung erreicht werden.

Des Weiteren ist es auch denkbar zur Herstellung der Kunststoffe Geruchsstoffe zuzugeben, wodurch die Wertigkeit des erfindungsgemäßen Filterelements beim Kunden steigt.

### Bezugszeichenliste

- 1: Dunstabzugshaube
- 2: Filterelement
- 3: Wrasenschirm
- 4: Ansaugöffnung
- 5: Kamin

- 20: Filterlage
- 201: Kunststoffmaterial
- 202: Öffnungen
- 203: Filterschicht
- 2030: Kunststoffprofil

- 100: Wrasen, Dünste
- 101: Partikel

## Patentansprüche

1. Filterelement (2) für eine Dunstabzugshaube (1), das zumindest eine Filterlage (20) aufweist, zumindest eine Filterlage (20) aus einem Kunststoffmaterial (201) besteht und die Filterlage (20) Öffnungen (202) aufweist, deren Größe fixiert ist, wobei die zumindest eine Filterlage (20) aus zumindest zwei Schichten (203) besteht und die Schichten (203) jeweils aus Kunststoffprofilen (2030) ausgebildet sind, **dadurch gekennzeichnet, dass** die Kunststoffprofile (2030) in den einzelnen Schichten (203) jeweils parallel zueinander in einer Ebene in einem definierten Abstand kleiner 2°mm zueinander angeordnet sind, so dass die Enden von benachbarten Kunststoffprofilen (2030) nebeneinander in dieser Ebene liegen, die Kunststoffprofile (2030) einer Schicht (203) über Kreuz auf den Kunststoffprofilen (2030) einer zweiten Schicht (203) angeordnet sind, durch die Ausrichtung der Kunststoffprofile (2030) in den einzelnen Schichten (203) die Öffnungen (202) der Filterlage (20) gebildet werden, die durch Filterstege, die aus den über Kreuz angeordneten Kunststoffprofilen (2030) der zwei Schichten (203) ausgebildet sind, begrenzt werden, und dass Versperrungen, die durch die Kunststoffprofile entstehen, unter 50% der Fläche der Filterlage liegen.

2. Filterelement (2), gemäß Anspruch 1, **dadurch gekennzeichnet, dass** die zumindest eine Filterlage (20) als ein ebenes Element ausgebildet ist.

3. Filterelement (2), gemäß einem der Ansprüche 1 bis 2, **dadurch gekennzeichnet, dass** zumindest zwei Schichten (203), die eine Filterlage (20) ausbilden, unlösbar miteinander verbunden sind.

4. Filterelement (2), gemäß einem der vorangehenden Ansprüche, **dadurch gekennzeichnet, dass** das Filterelement (2) zumindest zwei Filterlagen (20) aufweist.

5. Filterelement (2), gemäß Anspruch 4, **dadurch gekennzeichnet, dass** die zumindest zwei Filterlagen (20) innerhalb des Filterelementes (2) zueinander verdreht (v) angeordnet sind, so dass in senkrechter Draufsicht auf die aufeinanderliegenden Filterlagen zumindest ein Teil der Öffnungen der einen Filterlage durch die Filterstege der weiteren Filterlage verdeckt sind.

6. Filterelement (2), gemäß einem der vorangehenden Ansprüche, **dadurch gekennzeichnet, dass** der definierte Abstand bevorzugt kleiner als 1 mm und besonders bevorzugt kleiner als 0.5 mm ist.

## Claims

1. Filter element (2) for an extractor hood (1), which has at least one filter layer (20), at least one filter layer (20) consisting of a plastic material (201), and the filter layer (20) having openings (202), the size of which is fixed, wherein the at least one filter layer (20) consists of at least two layers (203) and the layers (203) are each embodied from plastic profiles (2030), **characterised in that** the plastic profiles (2030) in the individual layers (203) are arranged in each case parallel to one another in a plane at a defined distance of less than 2 mm from one another so that the ends of adjacent plastic profiles (2030) are adjacent to one another in this plane, the plastic profiles (2030) of a layer (203) are arranged crosswise on the plastic profiles (2030) of a second layer (203), the openings (202) of the filter layer (20) are formed by the alignment of the plastic profiles (2030) in the individual layers (203) and are delimited by filter webs which are embodied from the plastic profiles (2030) of the two layers (203) arranged crosswise, and that obstructions, which occur as a result of the plastic profiles, are below 50% of the surface of the filter layer.

2. Filter element (2) according to claim 1, **characterised in that** the at least one filter layer (20) is embodied as a flat element.

3. Filter element (2) according to one of claims 1 to 2, **characterised in that** at least two layers (203), which form a filter layer (20), are non-detachably connected to one another.

4. Filter element (2) according to one of the preceding claims, **characterised in that** the filter element (2) has at least two filter layers (20).

5. Filter element (2) according to claim 4, **characterised in that** the at least two filter layers (20) are arranged rotated (v) relative to one another within the filter element (2) so that in a vertical top view onto the filter layers disposed one above the other, at least one part of the openings of the one filter layer are covered by the filter webs of the further filter layer.

6. Filter element (2) according to one of the preceding claims, **characterised in that** the defined distance is preferably less than 1 mm and particularly preferably less than 0.5mm.

## Revendications

1. Élément filtrant (2) pour une hotte aspirante (1), qui présente au moins un étage filtrant (20), au moins un étage filtrant (20) se composant d'un matériau plastique (201) et l'étage filtrant (20) présentant des orifices (202) dont la taille est fixée, dans lequel l'au moins un étage filtrant (20) se compose d'au moins deux couches (203) et les couches (203) sont respectivement formées par des profilés en plastique (2030), **caractérisé en ce que** les profilés en plastique (2030) sont disposés dans les différentes couches (203) respectivement parallèlement l'un à l'autre dans un plan selon un écartement défini inférieur à 2°mm l'un par rapport à l'autre, de sorte que les extrémités de profilés en plastique voisins (2030) se trouvent l'un à côté de l'autre dans ce plan, les profilés en plastique (2030) d'une couche (203) sont croisés sur les profilés en plastique (2030) d'une deuxième couche (203), l'alignement des profilés en plastique (2030) dans les différentes couches (203) constitue les orifices (202) de l'étage filtrant (20) qui sont limités par les âmes de filtre formées par les profilés en plastique (2030) croisés des deux couches (203), et **en ce que** les encombrements créés par les profilés en plastique sont inférieurs à 50% de la surface de l'étage filtrant.

2. Élément filtrant (2) selon la revendication 1, **caractérisé en ce que** l'au moins un étage filtrant (20) est formé sous la forme d'un élément plat.

3. Élément filtrant (2) selon l'une des revendications 1 à 2, **caractérisé en ce qu'**au moins deux couches (203) constituant un étage filtrant (20) sont reliées de façon inamovible l'une à l'autre.

4. Élément filtrant (2) selon l'une des revendications précédentes, **caractérisé en ce que** l'élément filtrant (2) présente au moins deux étages filtrants (20).

5. Élément filtrant (2) selon la revendication 4, **caractérisé en ce que** les au moins deux étages filtrants (20) sont disposés en rotation (v) l'un par rapport à l'autre au sein de l'élément filtrant (2), de sorte qu'en vue verticale par le dessus sur les étages filtrants superposés au moins une partie des orifices de l'un des étages filtrants est couverte par les âmes de filtre de l'étage filtrant supplémentaire.

6. Élément filtrant (2) selon l'une des revendications précédentes, **caractérisé en ce que** l'écartement défini est de préférence inférieur à 1 mm et de façon particulièrement préférée inférieur à 0,5 mm.
